# EUROPÄISCHE PATENTSCHRIFT

(11) **EP 3 926 238 B1**
(45) Veröffentlichungstag und Bekanntmachung des Hinweises auf die Patenterteilung: **10.05.2023**
(21) Anmeldenummer: 21180176.6
(22) Anmeldetag: 17.06.2021
(51) Int. Cl.: F23R 3/10, F23R 3/04

(54) **BAUGRUPPE EINER GASTURBINE MIT BRENNKAMMERLUFTBYPASS**
GAS TURBINE MODULE WITH COMBUSTION CHAMBER AIR BYPASS
MODULE D'UNE TURBINE À GAZ POURVU DE DÉRIVATION D'AIR DE LA CHAMBRE DE COMBUSTION

(30) Priorität: 19.06.2020 DE 102020116245
(43) Veröffentlichungstag der Anmeldung: 22.12.2021
(73) Patentinhaber: MAN Energy Solutions SE, 86153 Augsburg (DE)
(72) Erfinder: Cosic, Bernhard, 40225 Düsseldorf (DE); Genin, Franklin, 5400 Baden (CH)

(56) Entgegenhaltungen:
- DE-A1- 1 601 531
- DE-A1-102009 046 066
- US-A1- 2005 016 178
- US-A1- 2010 319 349

## Beschreibung

Die Erfindung betrifft eine Gasturbine mit Brennkammerluftbypass.

Im Stand der Technik ist bereits eine Vielzahl von Varianten von Gasturbinen bekannt, welche zum Teil auch einen Brennkammerluftbypass aufweisen.

Grundsätzlich handelt es sich bei einer Gasturbine um eine Maschine zur Stromerzeugung oder Antriebsbereitstellung, in welcher ein Treibstoff bzw. ein Gemisch aus Luft und Treibstoff verbrannt wird, um eine mechanische Leistung zu erzeugen. Die Hauptkomponenten der Gasturbine sind dabei im Wesentlichen die Turbine, ein Verdichter und eine dazwischen liegende Brennkammer.

Zur Erzeugung der mechanischen Leistung wird dabei Luft in dem Kompressor komprimiert, mit einem Treibstoff vermischt und das Gemisch der eigentlichen Brennkammer zugeführt, in welcher das Gemisch in einer Verbrennungszone gezündet bzw. verbrannt wird. Das bei der Verbrennung einstehende Heißgas wird in der nachfolgenden Turbine entspannt.

Je nachdem, bei welcher Temperatur die Verbrennung des Gemisches in der Verbrennungszone stattfindet bzw. wie heiß die Flamme in der Verbrennungszone brennt, ändern sich die Emissionen der Turbine, so dass diese abhängig von der Temperatur der Verbrennung unterschiedliche Mengen an Stickstoffoxiden (NOx), Kohlenstoffmonoxiden (CO) und weiteren Abgasstoffen ausstößt.

Da die Emissionswerte gesetzlich reglementiert sind, ist es wünschenswert, die Verbrennungstemperatur und somit die Verbrennung in einem günstigen Bereich zu halten. Im Teillastbetrieb der Gasturbine, in welchem die Temperatur der Verbrennung unvorteilhaft und somit die Verbrennung unvollständig ist, wird im Stand der Technik hierfür oftmals ein Brennkammerluftbypass verwendet, durch welchen ein Teil der vom Kompressor in die Brennkammer strömenden Luft an der Verbrennungszone vorbeigeleitet wird.

Hierfür ist bei den bekannten Gasturbinen vorgesehen, dass Rohre ein äußeres Druckgehäuse, in welchem die vom Kompressor zur Brennkammer strömende Luft geführt wird, nach außen hin durchbrechen und an anderer Stelle durch das Druckgehäuse und eine die Brennkammer begrenzende Brennkammerwand in die Brennkammer führen.

Dies hat jedoch mehrere Nachteile. Zunächst kommt es aufgrund unterschiedlicher Temperaturen bzw. Betriebstemperaturen der Bauteile zu hohen Temperaturgradienten bzw. Dehnungen an dem Rohr selbst und an den Bauteilen, welche durch das Rohr verbunden sind, so dass ein Kompensator benötigt wird, um die unterschiedlichen Dehnungen der Bauteile auszugleichen. Hinzukommt, dass die Lebensdauer der Brennkammer bzw. der gesamten Gasturbine verringert wird, da durch die zwangsweise Verbindung der verschiedenen Bauteile zusätzliche Spannungen in diese eingebracht werden. Derart ausgebildete Brennkammerluftbypass-Systeme sind zudem sehr aufwändig und teuer, da diese neben den hohen Temperaturen auch großen Druckgradienten ausgesetzt werden.

US 2010 / 319 349 A1 offenbart eine Baugruppe für eine Gasturbine mit einer Brennkammer nach dem Oberbegriff des Anspruch 1.

US 2005 / 016 178 A1, DE 10 2009 046 066 A1 und DE 16 01 531 A1 offenbaren weitern Stand der Technik.

Der Erfindung liegt deshalb die Aufgabe zugrunde, die vorgenannten Nachteile zu überwinden und eine Gasturbine mit Brennkammerluftbypass bereitzustellen, deren Kosten trotz Brennkammerluftbypass gering und deren Lebensdauer trotz Brennkammerluftbypass hoch sind.

Diese Aufgabe wird durch die Merkmalskombination gemäß Patentanspruch 1 gelöst.

Erfindungsgemäß wird eine Baugruppe für eine Gasturbine bzw. Brennkammer-Baugruppe für eine Gasturbine und gemäß einem weiteren Aspekt der Erfindung eine Gasturbine mit einer solchen Baugruppe vorgeschlagen. Die Baugruppe weist eine Brennkammer, einen Drallkörper, welcher auch als Drallerzeuger bezeichnet werden kann, eine in einem Innenraum der Brennkammer angeordneten Verbrennungszone und einer Luftzuführung auf, wobei der Brennkammer über die Luftzuführung eine insbesondere von einem strömungstechnisch vorgeschalteten Kompressor einströmende Luftströmung zuführbar ist. In einem von der Luft durchströmbaren Übergangsbereich von der Luftzuführung zu dem Drallkörper ist ein Plenum ausgebildet bzw. vorgesehen, wobei das Plenum auch als Vorraum für die in den Drallkörper bzw. durch den Drallkörper in die Brennkammer strömende Luft bezeichnet werden kann. Ferner weist die Baugruppe angrenzend an den Luftraum, den Drallkörper und die Brennkammer einen die Brennkammer abschließenden Deckel auf, welcher die Brennkammer vorzugsweise einseitig bzw. stirnseitig verschließt und zusätzlich an dem Drallkörper anliegen oder diesen ausbilden sowie das Plenum stirnseitig begrenzen bzw. verschließen kann. Erfindungsgemäß ist zudem vorgesehen, dass die Baugruppe einen Luftführungskanal als Brennkammerluftbypass aufweist, welcher ausgebildet ist, einen Teil der in die Baugruppe durch die Luftzuführung strömenden Luftströmung von dem Plenum durch den Deckel und durch den Drallkörper an der Verbrennungszone vorbei in die Brennkammer zu leiten. Die durch die Luftzuführung führende Luftströmung wird entsprechend vorzugsweise in bzw. bei einem Teillastbetrieb der Gasturbine in eine durch den Drallkörper in die Verbrennungszone führende Hauptströmung und eine durch den Luftführungskanal an der Verbrennungszone vorbeiführende Nebenströmung aufgeteilt. Durch einen derart ausgebildeten Luftführungskanal bzw. dessen Erstreckung von dem Plenum durch den Deckel und den Drallkörper in die Brennkammer, werden lediglich Bauteile verbunden, welche im Betrieb der Gasturbine eine gleiche bzw. ähnliche Temperatur aufweisen, so dass es an dem Luftführungskanal oder an Bauteilen, welche an diesem angrenzen, nicht zu Temperaturdifferenzen kommt und entsprechend weder hohe Temperaturnoch Druckgradienten entstehen, so dass der Betriebspunkt der Brennkammer bzw. der in der Brennkammer stattfindenden Verbrennung verbessert wird, ohne hierfür aufwändige Maßnahmen wie das Vorsehen eines Kompensator ergreifen zu müssen.

Eine vorteilhafte Variante sieht entsprechend vor, dass ein Temperaturverlauf einer Temperatur des Luftführungskanals und/oder einer Temperatur angrenzend an den Luftführungskanal von einer Einströmseite, an welcher die Luft in den Luftführungskanal einströmt, zu einer Ausströmseite, aus welcher die Luft aus dem Luftführungskanal ausströmt, um maximal 10%, vorzugsweise maximal 5%, weiter vorzugsweise um maximal 1 % schwankt bzw. variiert. Entsprechend kann vorgesehen sein, dass der Luftführungskanal nur durch Bauteile, wie den Deckel, den Drallkörper und die Brennkammerwand führt, welche im Betrieb eine gleiche oder zumindest ähnliche Temperatur aufweisen, welche beispielsweise um maximal 10% voneinander abweicht. Durch den beispielsweise zumindest abschnittsweise als Rohr ausgebildeten Luftführungskanal sind also vorzugsweise nur Bauteile thermisch und/oder mechanisch verbunden, welche im Betrieb eine gleiche oder ähnliche Temperatur und ein gleiches oder ähnliches Materialverhalten aufweisen, so dass es nicht zu Temperatur- und/oder Dehnungsgradienten an dem Luftführungskanal bzw. entlang des Luftführungskanals kommt.

Um den Luftführungskanal vorteilhaft ausbilden zu können, sieht eine Weiterbildung vor, dass dieser zumindest abschnittsweise durch eine Rohrleitung gebildet ist.

Zusätzlich oder alternativ kann der Luftführungskanal zumindest abschnittsweise durch den Deckel gebildet sein, so dass beispielsweise ein durch den Deckel verlaufender Abschnitt des Luftführungskanals integral durch den Deckel ausgebildet sein kann.

Darüber hinaus kann vorgesehen sein, dass der Luftführungskanal zumindest abschnittsweise durch den Drallkörper gebildet ist. Wie auch beim Deckel kann der Drallkörper bzw. dessen Material integral den Luftführungskanal ausbilden. Sind beispielsweise Leitschaufeln oder andere Leitkörper vorgesehen, durch welche die durch den Drallkörper strömende Hauptströmung beim Einströmen in die Brennkammer mit einem Drall beaufschlagt werden soll, können diese zumindest zum Teil hohl ausgebildet sein, so dass die Nebenströmung die Leitkörper durchströmen kann und die Luft der Nebenströmung nicht in die Hauptströmung gelangen kann bzw. von dieser getrennt geführt ist. Alternativ kann jedoch auch einfach eine in oder zwischen den Leitkörpern und die Nebenströmung führende Rohrleitung vorgesehen sein.

Vorteilhaft ist insbesondere eine Ausführungsform, bei welcher der Luftführungskanal von dem Plenum durch den Deckel in einen Außenbereich führt, welcher vorzugsweise an einer von der Brennkammer abgewandten Seite des Deckels angeordnet ist. Der Luftführungskanal ist ausgebildet, die Nebenströmung in dem Außenbereich auf einer von der Brennkammer abgewandten Seite des Deckels umzulenken. Zudem führt der Luftführungskanal von dem Außenbereich durch den Deckel in den Drallkörper, in welchem die Nebenströmung vorzugsweise vollständig von der Hauptströmung isoliert bleibt. Von dem Drallkörper führt der Luftführungskanal in einen Abschnitt der Brennkammer, welcher in Strömungsrichtung der Hauptströmung nach und/oder versetzt zu der Verbrennungszone angeordnet ist, so dass die durch die Nebenströmung in die Brennkammer geführte Luft nicht in die Verbrennungszone strömen kann und entsprechend auch nicht an der Verbrennung beteiligt ist. Der durch den Außenbereich führende Abschnitt des Luftführungskanals, welcher beispielsweise durch ein Rohr gebildet sein kann, ist bezüglich seiner Länge und seinem Verlauf so ausgebildet, dass er im vom Austritt aus dem Deckel bis zum Eintritt in den Deckel seine Temperatur im Wesentlichen beibehält. Alternativ kann der Luftführungskanal auch vollständig im Deckel verlaufen, wodurch dieser jedoch aufwändiger und teurer wird.

Um den Luftstrom durch den Luftführungskanal bzw. ein Volumenstrom der Nebenströmung und somit auch einen Volumenstrom der Hauptströmung gezielt einstellen bzw. steuern zu können, sieht eine Weiterbildung zudem vor, dass in dem Luftführungskanal ein Ventil und vorzugsweise ein Proportionalventil angeordnet ist. Weiter vorzugsweise ist ein solches Ventil entlang des in dem Außenbereich verlaufenden Abschnitts des Luftführungskanals und/oder selbst im Außenbereich angeordnet, wodurch das Ventil einfach zu montieren und zu warten ist.

Um den Deckel und den Drallkörper sowie vorzugsweise den durch sie verlaufenden oder gebildeten Abschnitt des Luftführungskanals in vorteilhafterweise thermisch zu koppeln, ist bei einer weiteren Variante vorgesehen, dass der Deckel und der Drallkörper integral miteinander oder zumindest als ein Bauteil ausgebildet sind.

Um die Nebenströmung in der Brennkammer vorteilhaft verteilen und einleiten zu können, leitet der Luftführungskanal die Nebenströmung bei einer Ausführungsform zudem in einen in der Brennkammer ausgebildeten Ringraum, welcher die Verbrennungszone ringförmig umläuft. Vorzugsweise grenzt der Ringraum an eine Brennkammerwand an und wird von ihr zumindest abschnittsweise begrenzt. Die Position des Ringraums, von welchem aus die mit der Nebenströmung einströmende Luft ringförmig verteilt und in an den Ringraum angrenzende Abschnitte der Brennkammer eingeleitet werden kann, ist somit vorzugsweise in Radialrichtung und/oder in Axialrichtung bezüglich einer Rotations- bzw. Mittelachse der Brennkammer zu der Verbrennungszone verschoben.

Sind bei einer Variante mehrere Luftführungskanäle vorgesehen, können diese die Luft entlang der jeweiligen Nebenströmung in voneinander getrennte Räume in die Brennkammer einleiten. Beispielsweise können auch mehrere Ringräume vorgesehen sein, welche die Verbrennungszone jeweils teilweise ringförmig oder halbringförmig umlaufen. Sind mehrere Luftführungskanäle vorgesehen, weisen sie vorzugsweise jeweils den beschriebenen Verlauf und ein Ventil zur Steuerung des Luftvolumenstroms auf.

Um die durch die Nebenströmung in die Brennkammer geförderte Luft vorteilhaft in die Brennkammer bzw. so in die Brennkammer einleiten zu können, dass die Luft nicht in die Verbrennungszone strömt und nicht an der dort stattfindenden Verbrennung beteiligt ist, ist bei einer ebenfalls vorteilhaften Variante an dem Ringraum zumindest ein Strömungskörper vorgesehen, welcher beispielsweise als Einströmöffnung oder Düse ausgebildet sein kann. Durch den Strömungskörper wird die Nebenströmung bzw. die durch die Nebenströmung einströmende Luft in einen außerhalb des Ringraums liegenden Abschnitt der Brennkammer eingeleitet. Vorzugsweise sind mehrere Strömungskörper vorgesehen, welche in gleichmäßigen Abständen ringförmig an bzw. mit dem Ringraum angeordnet sind, so dass die Nebenströmung ringförmig um die in der Verbrennungszone entstehenden Heißgase einströmt, vorzugsweise ohne die Verbrennung in der Verbrennungszone zu negativ zu beeinflussen.

Die durch die Nebenströmung in die Brennkammer geförderte Luft kann dann gemeinsam mit den Heißgasen, welche durch die Verbrennung der durch die Hauptströmung in die Verbrennungszone geförderten Luft entstehen, aus der Brennkammer in die eigentliche Turbine gefördert werden.

Entsprechend sieht eine weitere vorteilhafte Variante vor, dass der zumindest eine Strömungskörper bzw. die Strömungskörper ausgebildet ist/sind, die Nebenströmung derart in den außerhalb des Ringraums liegenden Abschnitt der Brennkammer einzuleiten oder einzudüsen, dass die Nebenströmung in der Brennkammer nicht durch die Verbrennungszone bzw. zu der Verbrennungszone verläuft und somit eine in der Verbrennungszone stattfindende Verbrennung eines Gemisches aus einem Brennstoff und der Luft der Hauptströmung nicht beeinflusst und vorzugsweise nicht negativ beeinflusst wird. Insbesondere wird die durch den zumindest einen Strömungskörper eingeleitete Luft der Nebenströmung durch die bei der Verbrennung entstehenden Heißgase mitgerissen und in Richtung der Turbine geführt.

Vorzugsweise ist die Brennkammer eine Rohrbrennkammer, so dass also die Brennkammer rohrförmig ausgebildet ist, was in der Fachsprache auch als "Can-Type" bezeichnet wird. Der Deckel mit dem Drallkörper sowie auch die Verbrennungszone in der Brennkammer sind hierbei vorzugsweise an einem stirnseitigen Ende bzw. Abschnitt der Rohrbrennkammer vorgesehen, welches bzw. welcher von der eigentlichen Turbine abgewandt ist.

Ferner umfasst die Gasturbine bzw. die Baugruppe bei einer vorteilhaften Variante ein die Brennkammer beabstandet umgebendes Druckgehäuse bzw. äußeres Druckgehäuse, wobei die Luftzuführung durch einen Luftraum zwischen einer die Brennkammer begrenzenden Brennkammerwand und dem die Brennkammerwand ringförmig umlaufenden Druckgehäuse gebildet wird. Entsprechend erstreckt sich auch der Luftraum vorzugsweise ringförmig um die Brennkammer.

Die vorstehend offenbarten Merkmale sind beliebig kombinierbar, soweit dies technisch möglich ist und diese nicht im Widerspruch zueinander stehen.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: ein Ausschnitt einer Brennkammer mit daran angeordneten Druckgehäuse, Drallkörper und Deckel
- Fig. 2: ein Ausschnitt eines in der Brennkammer gebildeten Druckraums

Die Figuren sind beispielhaft schematisch. Gleiche Bezugszeichen in den Figuren weisen auf gleiche funktionale und/oder strukturelle Merkmale hin.

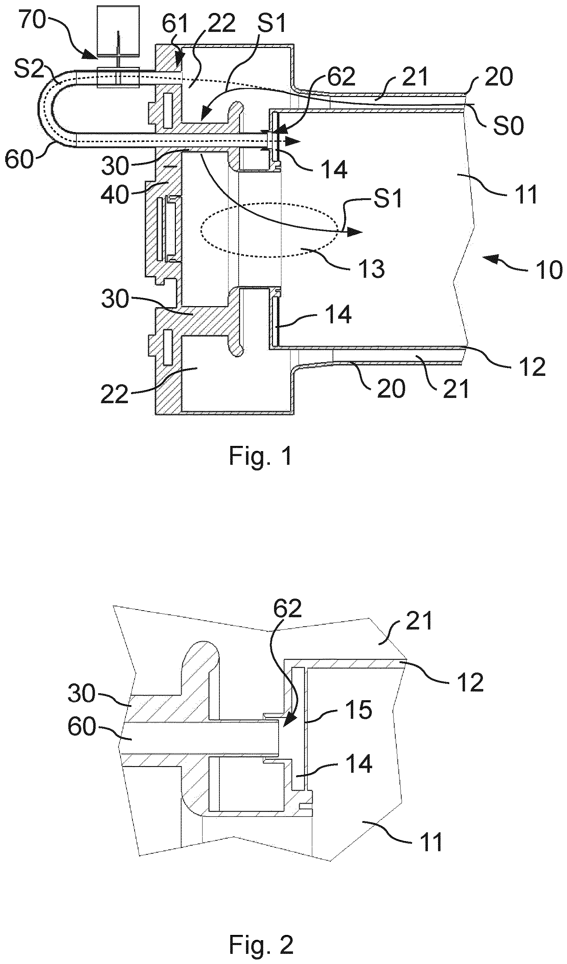

Figur 1 zeigt einen Teil einer Gasturbine bzw. einer Baugruppe einer Gasturbine und genauer einen Ausschnitt einer als Rohrbrennkammer ausgeführten Brennkammer 10, um welche in Umfangsrichtung ringförmig ein Druckgehäuse 20 angeordnet ist, sowie einen stirnseitig an der Brennkammer 10 angeordneten Drallkörper 30 und einen die Brennkammer 10 stirnseitig verschließenden Deckel 40. Die in Figur 1 dargestellte und aus den vorgennannten Komponenten (eigentliche Brennkammer 10, Druckgehäuse 20, Drallkörper 30, Deckel 40) bestehende Baugruppe kann auch in ihrer Gesamtheit als Brennkammer bezeichnet werden, wobei vorliegend das eigentliche Bauteil, in welchem die Verbrennung stattfindet als Brennkammer 10 bezeichnet wird.

Eine durch einen strömungstechnisch vorgeschalteten Kompressor verdichtete Luft strömt entlang der Luftströmung S0 durch den Luftraum 21, welcher durch die ringförmige Anordnung des Druckgehäuses 20 um die Brennkammer 10 bzw. den Abstand zwischen einer die Brennkammer 10 in Umfangsrichtung um ihre Mittelachse umlaufende und dadurch in Radialrichtung begrenzenden Brennkammerwand 12 bestimmt ist. Entsprechend ist auch der Luftraum 21 selbst ringförmig um die Brennkammer 10 ausgebildet. Auch die Luftströmung S0 strömt durch den Luftraum 21 ringförmig von dem vorgeschalteten Kompressor zu der Vorkammer bzw. dem Vorraum des Drallkörpers 30 in welchem das Plenum 22 gebildet ist, wobei in der Figur 1 beispielhaft nur ein möglicher Strömungsverlauf gezeigt und bezeichnet ist. Dass der dargestellte Strömungsverlauf lediglich beispielhaft ist, gilt sowohl für die vom Kompressor einströmende Luftströmung S0, welche auch als Grundströmung bezeichnet werden kann, als auch für eine nachfolgend erläuterte Hauptströmung S1 und eine Nebenströmung S2.

Die entlang der Luftströmung S0 in das Plenum 22 einströmende Luft wird zumindest in einem Teillastbetrieb der Gasturbine durch entsprechende Freigabe des Luftführungskanals 60 mittels eines Ventils 70 in eine Hauptströmung S1 und eine Nebenströmung S0 aufgeteilt. Die entlang der Hauptströmung S1 strömende Luft durchströmt den Drallkörper 30 und wird dabei verdraht bzw. mit einem Drall beaufschlagt. Die aus dem Drallkörper 30 entlang der Hauptströmung S1 in die Brennkammer 10 strömende bzw. eingedüste und drallbehaftete Luft, welche zuvor und vorzugsweise in dem Drallkörper 30 und/oder einem ringförmig von dem Drallkörper 30 umgebenen Raum und/oder dem Deckel 40 mit einem Kraftstoff bzw. Brennstoff gemischt wurde, bzw. das dadurch entstehende Gemisch aus Luft und Brennstoff, wird in der Brennkammer 10 gezündet bzw. verbrannt, so dass sich in der Verbrennungszone 13 in der Brennkammer 10 die Verbrennung stabilisiert und in der Verbrennungszone 13 eine Flamme brennt.

Der Arbeitsbereich der Flamme und somit der Verbrennung in der Verbrennungszone hängt unter anderem vom Verhältnis aus der über die Hauptströmung S1 zugeführten Luft und Brennstoff ab. Das Gemisch kann auch als Luft-Brennstoffgemisch bezeichnet werden.

Wird die Brennkammer 10 zu mager betrieben, steigen die Kohlenmonoxidemissionen sehr stark an. Dies schränkt der Betriebsbereich der Gasturbine im Teillastbereich ein. Um die Emissionen gering zu halten und den Arbeitsbereich der in der Verbrennungszone 13 stattfindenden Verbrennung bzw. der Brennkammer 10 zu erhöhen, ist es möglich, die ankommende entlang der Luftströmung S0 einströmende Luft durch Öffnung bzw. Einstellung des Ventils 70 durch den Luftführungskanal 60 entlang der Nebenströmung S1 an der Verbrennungszone 13 vorbei zu leiten, so dass weniger Luft der Flamme zugeführt wird und damit Kohlenstoffmonoxid-Emissionen vermieden werden.

Entsprechend der Erfindung ist bei der ausschnittsweise dargestellten Gasturbine bzw. der Baugruppe in Figur 1 vorgesehen, dass ein Teil der durch den Luftraum 21 in das Plenum 22 bzw. den Vorraum des Drallkörpers 30 einströmenden Luft durch den Deckel 40 abgeleitet wird, wodurch die durch den Luftführungskanal 60 verlaufende Nebenströmung S2 entsteht. Das entlang der Nebenströmung S2 geförderte Luftvolumen bzw. die Menge an Luft, welche von der durch den Luftraum 20 zuströmenden Luft abgeteilt wird, wird durch das Ventil 70 bzw. eine Ventilstellung des Ventils 70 gesteuert.

Die entlang der Nebenströmung S2 strömende Luft wird durch den hier beispielhaft rohrförmig ausgebildeten Luftführungskanal 60 von dem Deckel 40 zu dem Ventil 70 zurück zum Deckel 40 durch den Drallkörper 30 geleitet und in einen Ringraum 14 stromab des Drallkörpers 30 geleitet.

Der Ringraum 14 ist ausschnittsweise und vergrößert in Figur 2 dargestellt. Die durch den Luftführungskanal 60 in den Ringraum 14 geförderte Luft wird über einen bzw. zumindest einen Strömungskörper 15 so in die Brennkammer 10 eingeleitet bzw. eingedüst, dass die Flamme bzw. die Verbrennung in der Verbrennungszone 13 nicht nachteilig beeinflusst wird. Hierdurch bzw. durch den Verlauf des Luftführungskanals 60 von seiner Einströmseite 61 im bzw. am Plenum 22 zu seiner Ausströmseite 62 im oder am Ringraum 14 durch den Deckel 40 und den Drallkörper 30 werden nur Bauteile miteinander verbunden, welche ungefähr dieselbe Materialtemperatur haben und auch ohne einen durch den Luftführungskanal 60 gebildeten Brennkammerluftbypass miteinander verbunden sind. Dadurch werden die Nachteile der meisten im Stand der Technik bekannten Gasturbinen mit Brennkammerbypässen vermieden.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht.

### Bezugszeichenliste:

- 10: Brennkammer
- 11: Innenraum der Brennkammer
- 12: Brennkammerwand
- 13: Verbrennungszone
- 14: Ringraum
- 15: Strömungskörper
- 20: Druckgehäuse
- 21: Luftraum
- 22: Plenum
- 30: Drallkörper
- 40: Deckel
- 60: Luftführungskanal
- 61: Einströmseite des Luftführungskanals
- 62: Ausströmseite des Luftführungskanals
- 70: Ventil
- S0: Durch den Luftraum führende Luftströmung
- S1: Hauptströmung
- S2: Nebenströmung

## Patentansprüche

1. Baugruppe für eine Gasturbine mit einer Brennkammer (10), einem Drallkörper (30), einer in einem Innenraum (11) der Brennkammer (10) angeordneten Verbrennungszone (13) und einer Luftzuführung, über welche der Brennkammer (10) eine Luftströmung zuführbar ist,
wobei in einem von der Luft durchströmbaren Übergangsbereich von der Luftzuführung zu dem Drallkörper (30) ein Plenum (22) ausgebildet ist und die Baugruppe angrenzend an das Plenum (22), den Drallkörper (30) und die Brennkammer (10) einen die Brennkammer (10) abschließenden Deckel (40) aufweist,
wobei die Baugruppe einen Luftführungskanal (60) als Brennkammerluftbypass aufweist,
**dadurch gekennzeichnet, dass**
der Luftführungskanal (60) ausgebildet ist, einen Teil der in die Baugruppe durch die Luftzuführung strömenden Luftströmung von dem Plenum (22) durch den Deckel (40) und durch den Drallkörper (30) an der Verbrennungszone (13) vorbei in die Brennkammer (10) zu leiten, so dass die durch die Luftzuführung führende Luftströmung (S0) in eine durch den Drallkörper (30) in die Verbrennungszone (13) führende Hauptströmung (S1) und eine an der Verbrennungszone (13) vorbei führende Nebenströmung (S2) aufgeteilt wird.

2. Baugruppe nach Anspruch 1,
wobei ein Temperaturverlauf einer Temperatur des Luftführungskanals (60) und/oder einer Temperatur angrenzend an den Luftführungskanal (60) von einer Einströmseite (61), an welcher die Luft in den Luftführungskanal (60) einströmt, zu einer Ausströmseite (62), aus welcher die Luft aus dem Luftführungskanal (60) ausströmt, um maximal 10% variiert.

3. Baugruppe nach Anspruch 1 oder 2,
wobei der Luftführungskanal (60) zumindest abschnittsweise durch eine Rohrleitung gebildet ist.

4. Baugruppe nach einem der vorhergehenden Ansprüche,
wobei der Luftführungskanal (60) zumindest abschnittsweise durch den Deckel (40) gebildet ist.

5. Baugruppe nach einem der vorhergehenden Ansprüche,
wobei der Luftführungskanal (60) zumindest abschnittsweise durch den Drallkörper (30) gebildet ist.

6. Baugruppe nach einem der vorhergehenden Ansprüche,
wobei der Luftführungskanal (60) von dem Plenum (22) durch den Deckel (40) in einen Außenbereich führt,
der Luftführungskanal (60) ausgebildet ist, die Nebenströmung (S2) in dem Außenbereich auf einer von der Brennkammer (10) abgewandten Seite des Deckels (40) umzulenken,
der Luftführungskanal (60) von dem Außenbereich durch den Deckel (40) in den Drallkörper (30) und von dem Drallkörper (30) in einen Abschnitt der Brennkammer (10) führt, welcher in Strömungsrichtung der Hauptströmung (S0) nach und/oder versetzt zu der Verbrennungszone (13) angeordnet ist.

7. Baugruppe nach einem der vorhergehenden Ansprüche,
wobei in dem Luftführungskanal (60) ein Ventil (70) angeordnet ist, durch welches ein Volumenstrom der Nebenströmung einstellbar ist.

8. Baugruppe nach einem der vorhergehenden Ansprüche,
wobei der Deckel (40) und der Drallkörper (30) integral miteinander ausgebildet sind.

9. Baugruppe nach einem der vorhergehenden Ansprüche,
wobei der Luftführungskanal (60) die Nebenströmung (S2) in einen in der Brennkammer (10) ausgebildeten Ringraum (14) leitet, welcher die Verbrennungszone (13) ringförmig umläuft.

10. Baugruppe nach dem vorhergehenden Anspruch,
wobei an dem Ringraum (14) zumindest ein Strömungskörper (15) vorgesehen ist, durch welchen die Nebenströmung (S2) in einen außerhalb des Ringraums (14) liegenden Abschnitt der Brennkammer (10) eingeleitet wird.

11. Baugruppe nach dem vorhergehenden Anspruch,
wobei der zumindest eine Strömungskörper (15) ausgebildet ist, die Nebenströmung (S2) derart in den außerhalb des Ringraums liegenden Abschnitt der Brennkammer (10) einzuleiten, dass die Nebenströmung (S2) in der Brennkammer (10) nicht durch die Verbrennungszone (13) verläuft und somit eine in der Verbrennungszone (13) stattfindende Verbrennung eines Gemisches aus einem Brennstoff und der Luft der Hauptströmung (S1) nicht beeinflusst wird.

12. Baugruppe nach einem der vorhergehenden Ansprüche,
wobei die Brennkammer (10) eine Rohrbrennkammer ist.

13. Baugruppe nach einem der vorhergehenden Ansprüche,
ferner umfassend ein die Brennkammer (10) umgebendes Druckgehäuse (20),
wobei die Luftzuführung durch einen Luftraum (21) zwischen einer die Brennkammer (10) begrenzenden Brennkammerwand (12) und dem die Brennkammerwand (12) ringförmig umlaufenden Druckgehäuse (20) gebildet wird.

14. Gasturbine mit einer Baugruppe gemäß einem der vorhergehenden Ansprüche.

## Claims

1. An assembly for a gas turbine having a combustion chamber (10), a swirl body (30), a combustion zone (13) arranged in an interior (11) of the combustion chamber (10) and an air supply, via which an air flow can be supplied to the combustion chamber (10),
wherein in a transition region from the air supply to the swirl body (30) through which the air can flow a plenum (22) is formed and the assembly adjoining the plenum (22), the swirl body (30) and the combustion chamber (10) comprises a cover (40) terminating the combustion chamber (10),
wherein the assembly comprises an air conduction channel (60) as combustion chamber air bypass,
**characterised in that**
the air conduction channel (60) is formed for conducting a part of the air flow flowing through the air supply from the plenum (22) through the cover (40) and through the swirl body (30) past the combustion zone (13) into the combustion chamber (10), so that the air flow (S0) leading through the air supply is divided into a main flow (S1) leading through the swirl body (30) into the combustion zone (13) and a bypass flow (S2) leading past the combustion zone (13) .

2. The assembly according to Claim 1,
wherein a temperature profile of a temperature of the air conduction channel (60) and/or of a temperature adjoining the air conduction channel (60) varies from an inflow side (61), on which the air flows into the air conduction channel (60), to an outflow side (62), from which the air flows out of the air conduction channel (60) by maximally 10%.

3. The assembly according to Claim 1 or 2,
wherein the air conduction channel (60) is at least in portions formed by a pipeline.

4. The assembly according to any one of the preceding claims,
wherein the air conduction channel (60) is at least in portions formed by the cover (40).

5. The assembly according to any one of the preceding claims,
wherein the air conduction channel (60) is at least in portions formed by the swirl body (30).

6. The assembly according to any one of the preceding claims,
wherein the air conduction channel (60) leads from the plenum (22) through the cover (40) into an external region,
the air conduction channel (60) is formed to redirect the bypass flow (S2) in the external region on a side of the cover (40) facing away from the combustion chamber (10),
the air conduction channel (60) leads from the external region through the cover (40) into the swirl body (30) and from the swirl body (30) into a portion of the combustion chamber (10) which in the flow direction of the main flow (S0) is arranged after and/or offset from the combustion zone (13).

7. The assembly according to any one of the preceding claims,
wherein in the air conduction channel (60) a valve (70) is arranged, by way of which a volumetric flow of the bypass flow is adjustable.

8. The assembly according to any one of the preceding claims,
wherein the cover (40) and the swirl body (30) are formed integrally with one another.

9. The assembly according to any one of the preceding claims,
wherein the air conduction channel (60) conducts the bypass flow (S2) into an annular space (14) formed in the combustion chamber (10), which annularly encircles the combustion zone (13).

10. The assembly according to the preceding claim,
wherein on the annular space (14) at least one flow body (15) is provided, through which the bypass flow (S2) is introduced into a portion of the combustion chamber (10) located outside the annular space (14).

11. The assembly according to the preceding claim,
wherein the at least one flow body (15) is formed to introduce the bypass flow (S2) into the portion of the combustion chamber (10) located outside the annular space in such a manner that the bypass flow (S2) in the combustion chamber (10) does not run through the combustion zone (13) and thus does not influence a combustion taking place in the combustion zone (13) of a mixture of a fuel and the air of the main flow (S1).

12. The assembly according to any one of the preceding claims,
wherein the combustion chamber (10) is a tubular combustion chamber.

13. The assembly according to any one of the preceding claims,
further including a pressure housing (20) surrounding the combustion chamber (10),
wherein the air supply is formed by an air space (21) between a combustion chamber wall (12) delimiting the combustion chamber (10) and the pressure housing (20) annularly encircling the combustion chamber wall (12).

14. A gas turbine having an assembly according to any one of the preceding claims.

## Revendications

1. Ensemble pour turbine à gaz comportant une chambre de combustion (10), un corps tourbillonnaire (30), une zone de combustion (13) disposée dans un intérieur (11) de la chambre de combustion (10) et une alimentation en air, via laquelle un flux d'air peut être fourni à la chambre de combustion (10),
dans lequel un plénum (22) est formé dans une région de transition à travers laquelle l'air peut s'écouler de l'alimentation en air vers le corps tourbillonnant (30) et l'ensemble adjacent au plénum (22), au corps tourbillonnaire (30) et à la chambre de combustion (10) présente un couvercle (40) isolant de manière étanche la chambre de combustion (10),
dans lequel l'ensemble présente un canal d'alimentation d'air (60) en tant que déviation d'air de chambre de combustion, **caractérisé en ce que** le conduit d'alimentation d'air (60) est configuré afin de guider une partie du flux d'air s'écoulant dans l'ensemble à travers le canal d'air depuis le plénum (22) à travers le couvercle (40) et à travers le corps tourbillonnaire (30) au-delà de la zone de combustion (13) dans la chambre de combustion (10), de sorte que le flux d'air (S0) menant à travers le canal d'alimentation soit divisé en un flux principal (S1) menant à travers le corps tourbillonnaire (30) dans la zone de combustion (13) et un flux secondaire (S2) débouchant devant la zone de combustion (13).

2. Ensemble selon la revendication 1, dans lequel un profil de température d'une température du canal d'alimentation d'air (60) et/ou d'une température adjacente au canal d'alimentation d'air (60) varie d'un maximum de 10 % depuis un côté d'entrée (61) sur lequel l'air entre dans le canal d'alimentation d'air (60), vers un côté de sortie (62), à partir duquel l'air s'écoule hors du canal d'alimentation d'air (60) .

3. Ensemble selon la revendication 1 ou 2, dans lequel le canal d'alimentation d'air (60) est formé au moins par tronçons par une canalisation.

4. Ensemble selon une des revendications précédentes, dans lequel le canal d'alimentation d'air (60) est formé au moins par tronçons par le couvercle (40).

5. Ensemble selon une des revendications précédentes, dans lequel le canal d'alimentation d'air (60) est formé au moins par tronçons par le corps tourbillonnaire (30).

6. Ensemble selon une des revendications précédentes, dans lequel le canal d'alimentation d'air (60) mène du plénum (22) à travers le couvercle (40) dans une zone extérieure,
le canal d'alimentation d'air (60) est configuré pour dévier le flux secondaire (S2) dans la zone extérieure sur un côté du couvercle (40) tourné à l'opposé de la chambre de combustion (10),
le canal d'alimentation d'air (60) mène de l'extérieur à travers le couvercle (40) dans le corps tourbillonnaire (30) et du corps tourbillonnaire (30) dans une section de la chambre de combustion (10) qui, dans le sens d'écoulement du flux principal (S0) est disposé après et/ou en décalage par rapport à la zone de combustion (13).

7. Ensemble selon une des revendications précédentes, dans lequel une soupape (70) est agencée dans le canal d'alimentation d'air (60), à travers laquelle un débit volumétrique du flux secondaire peut être réglé.

8. Ensemble selon une des revendications précédentes, dans lequel le couvercle (40) et le corps tourbillonnaire (30) sont formés en un seul tenant l'un avec l'autre.

9. Ensemble selon une des revendications précédentes, dans lequel le canal d'alimentation d'air (60) guidant le flux secondaire (S2) dans un espace annulaire (14) qui est ménagé dans la chambre de combustion (10) et qui entoure de manière annulaire la zone de combustion (13) .

10. Ensemble selon la revendication précédentes, dans lequel sur l'espace annulaire (14) au moins un corps d'écoulement est prévu, à travers lequel le flux secondaire (S2) est introduit dans une section située à l'extérieur de l'espace annulaire (14) de la chambre de combustion (10).

11. Ensemble selon la revendication précédente, dans lequel le au moins un corps de flux (15) est configuré pour introduire le flux secondaire (S2) dans la section de la chambre de combustion (10) située à l'extérieur de l'espace annulaire de telle sorte que le flux secondaire (S2) dans la chambre de combustion (10) ne traverse pas la zone de combustion (13) et ainsi une combustion se produisant dans la zone de combustion (13) d'un mélange d'un carburant et de l'air du flux principal (S1) n'est pas affectée.

12. Ensemble selon une quelconque des revendications précédentes, dans lequel la chambre de combustion (10) est une chambre de combustion tubulaire.

13. Ensemble selon une des revendications précédentes,
comprenant en outre une chambre de combustion (10) entourant un boîtier de pression (20),
dans lequel l'alimentation en air est formée par un espace d'air (21) entre une paroi de chambre de combustion (12) délimitant la chambre de combustion (10) et le boîtier de pression (20) entourant annulairement la paroi de chambre de combustion (12).

14. Turbine à gaz comportant un ensemble selon une quelconque des revendications précédentes.
